# EUROPEAN PATENT SPECIFICATION

(11) **EP 4 678 488 B1**
(45) Date of publication and mention of the grant of the patent: **07.10.2026**
(21) Application number: 24717271.1
(22) Date of filing: 12.02.2024
(51) Int. Cl.: B60T 7/22, B60T 8/17, B60W 30/17

(54) **CONTROL DEVICE AND CONTROL METHOD FOR CONTROLLING A BEHAVIOR OF A STRADDLE-TYPE VEHICLE**
STEUERUNGSVORRICHTUNG UND STEUERUNGSVERFAHREN ZUR STEUERUNG EINES VERHALTENS EINES GRÄTSCHSITZFAHRZEUGS
DISPOSITIF DE COMMANDE ET PROCÉDÉ DE COMMANDE POUR COMMANDER LE COMPORTEMENT D'UN VÉHICULE À SELLE

(30) Priority: 03.03.2023 JP 2023032956
(43) Date of publication of application: 14.01.2026
(73) Proprietor: Robert Bosch GmbH, 70442 Stuttgart (DE)
(72) Inventor: FUJIMOTO, Mika, Yokohama-shi, Kanagawa 224-8501 (JP); OSHIDA, Yuki, Yokohama-shi, Kanagawa 224-8501 (JP)
(86) International application number: PCT/IB2024/051273
(87) International publication number: WO 2024/184710

(56) References cited:
- EP-A1- 3 395 631
- EP-A1- 3 409 546
- EP-A1- 3 663 143
- WO-A1-2005/092659
- US-A1- 2018 137 762

## Description

### Technical Field

This disclosure relates to a control device and a control method capable of suppressing a decrease in the life span of an actuator of a straddle-type vehicle.

### Background Art

In the related art, various techniques that assist a rider in driving a straddle-type vehicle such as a motorcycle have been proposed. For example, in PTL 1, a driver assistance system that warns a rider of a motorcycle that the motorcycle inappropriately approaches an obstacle, based on information detected by a sensor device that detects an obstacle in a traveling direction or substantially in the traveling direction, has been disclosed. PTL 2 relates to a vehicle body behavior control system for executing an automatic brake operation that is adopted for the motorcycle and automatically controls behavior of the motorcycle in accordance with the peripheral environment. PTL 3 relates to a single-track vehicle with a brake control unit.

### Citation List

### Patent Literature

PTL 1: JP2009-116882A
PTL 2: EP 3 663 143 A1
PTL 3: WO 2005/092659 A1

### Summary of Invention

### Technical Problem

By the way, as a technique for assisting the driving of a vehicle, there is a positional relationship adjustment operation that adjusts the positional relationship between the vehicle and an object (for example, a target vehicle) to a target positional relationship. Further, in the positional relationship adjustment operation, there is a technique for automatically decelerating and stopping a vehicle and executing brake maintenance control to maintain a state where a braking force is automatically applied to the stopped vehicle. It is considered that such a positional relationship adjustment operation is applied to a straddle-type vehicle. In this case, it is assumed that the life span of an actuator that generates a braking force in the straddle-type vehicle decreases due to the actuator being operated by the brake maintenance control. Therefore, it is desirable to suppress a decrease in the life span of the actuator of the straddle-type vehicle.

The present invention has been made in view of the above-described problems, and is intended to obtain a control device and a control method capable of suppressing a decrease in the life span of an actuator of a straddle-type vehicle. Solution to Problem

According to the invention, there is provided a control device that controls a behavior of a straddle-type vehicle, the device including: an execution section that executes a positional relationship adjustment operation that adjusts a positional relationship between the straddle-type vehicle and an object to a target positional relationship, based on surrounding environment information of the straddle-type vehicle. In the positional relationship adjustment operation, the execution section executes a first phase in which the straddle-type vehicle is automatically decelerated and stopped, a second phase in which brake maintenance control that maintains a state where a braking force is automatically applied to the stopped straddle-type vehicle is executed, and a third phase in which the straddle-type vehicle is automatically started in response to an acquisition of a start trigger signal, in order. In the second phase, when a release condition is satisfied before the start trigger signal is acquired in a situation where the brake maintenance control is executed, a release operation that automatically releases the braking force applied to the straddle-type vehicle is executed.

According to the invention, there is provided a control method for controlling a behavior of a straddle-type vehicle, the method including: causing an execution section of a control device to execute a positional relationship adjustment operation that adjusts a positional relationship between the straddle-type vehicle and an object to a target positional relationship, based on surrounding environment information of the straddle-type vehicle. In the positional relationship adjustment operation, the execution section executes a first phase in which the straddle-type vehicle is automatically decelerated and stopped, a second phase in which brake maintenance control that maintains a state where a braking force is automatically applied to the stopped straddle-type vehicle is executed, and a third phase in which the straddle-type vehicle is automatically started in response to an acquisition of a start trigger signal, in order. In the second phase, when a release condition is satisfied before the start trigger signal is acquired in a situation where the brake maintenance control is executed, a release operation that automatically releases the braking force applied to the straddle-type vehicle is executed.

### Advantageous Effects of Invention

In the control device and the control method according to the invention, the execution section of the control device executes the positional relationship adjustment operation that adjusts the positional relationship between the straddle-type vehicle and the object to the target positional relationship, based on the surrounding environment information of the straddle-type vehicle. In the positional relationship adjustment operation, the execution section executes the first phase in which the straddle-type vehicle is automatically decelerated and stopped, the second phase in which the brake maintenance control that maintains a state where the braking force is automatically applied to the stopped straddle-type vehicle is executed, and the third phase in which the straddle-type vehicle is automatically started in response to the acquisition of the start trigger signal, in order. In the second phase, when the release condition is satisfied before the start trigger signal is acquired in a situation where the brake maintenance control is executed, the release operation that automatically releases the braking force applied to the straddle-type vehicle is executed. As a result, the operation of an actuator, which generates the braking force in the straddle-type vehicle, by the brake maintenance control can be suppressed. Therefore, a decrease in the life span of the actuator of the straddle-type vehicle can be suppressed.

### Brief Description of Drawings

Fig. 1 is a schematic diagram illustrating a schematic configuration of a straddle-type vehicle according to an embodiment of the invention.
Fig. 2 is a block diagram illustrating one example of a functional configuration of a control device according to the embodiment of the invention.
Fig. 3 is a schematic diagram illustrating a schematic configuration of a brake system of the straddle-type vehicle according to the embodiment of the invention.
Fig. 4 is a diagram illustrating one example of the transition of a braking force applied to the straddle-type vehicle in brake maintenance control according to the embodiment of the invention.
Fig. 5 is a flowchart illustrating one example of the flow of a first process performed by the control device according to the embodiment of the invention.
Fig. 6 is a flowchart illustrating one example of the flow of a second process performed by the control device according to the embodiment of the invention.
Fig. 7 is a diagram for describing a third process performed by the control device according to the embodiment of the invention.

### Description of Embodiments

Hereinafter, a control device and a control method according to the invention will be described with reference to the drawings.

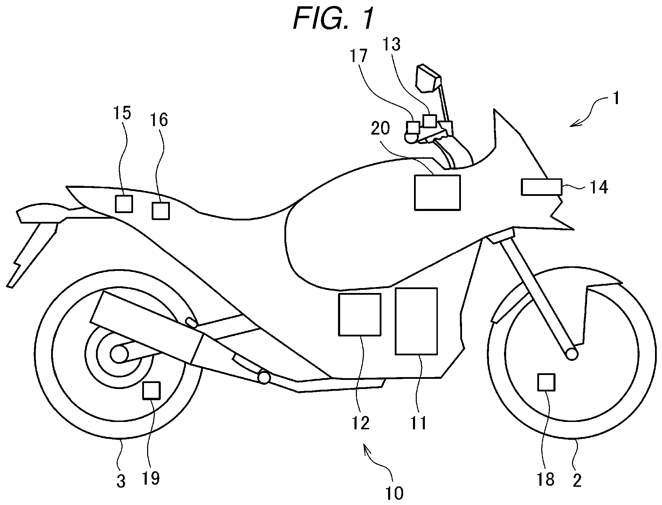

Incidentally, hereinafter, a control device used for a two-wheeled motorcycle will be described (refer to a straddle-type vehicle 1 in Fig. 1); however, a vehicle to be controlled by the control device according to the invention may be a straddle-type vehicle other than a two-wheeled motorcycle. The straddle-type vehicle refers to a vehicle that a rider rides astride. The straddle-type vehicle includes, for example, motorcycles (a motorized two-wheeled vehicle and a motorized three-wheeled vehicle), bicycles, and the like. The motorcycle includes a vehicle using an engine as a power source, a vehicle using an electric motor as a power source, and the like. The motorcycle includes, for example, a motorbike, a scooter, an electric scooter, and the like. The bicycle refers to a vehicle that can be propelled on a road by a rider's pedaling force applied to pedals. The bicycle includes a regular bicycle, an electricassisted bicycle, an electric bicycle, and the like.

In addition, hereinafter, a case where an engine (specifically, an engine 11 in Fig. 1 to be described later) is installed as a drive source capable of outputting power to drive a drive wheel will be described; however, a drive source other than an engine (for example, an electric motor) may be installed as the drive source, or a plurality of drive sources may be installed.

In addition, hereinafter, a case where a control unit that controls the hydraulic pressure of a brake fluid (specifically, a hydraulic pressure control unit 12 in Fig. 1 to be described later) is adopted as a control unit for braking forces generated in wheels will be described; however, a control unit that controls the position of brake units themselves of the wheels using an electrical signal (so-called brake-by-wire) may be adopted as the control unit for braking forces generated on the wheels.

In addition, configurations, operations, and the like to be described below are one example, and the control device and the control method according to the invention are not limited to such configurations, operations, and the like.

In addition, hereinafter, the same or similar descriptions are simplified or omitted as appropriate. In addition, in each drawing, for the same or similar members or portions, the assignment of reference signs is omitted or the same reference signs are assigned. In addition, the illustration of detailed structures is simplified or omitted as appropriate.

### <Configuration of straddle-type vehicle>

A configuration of the straddle-type vehicle 1 according to an embodiment of the invention will be described with reference to Figs. 1 to 3.

Fig. 1 is a schematic diagram illustrating a schematic configuration of the straddle-type vehicle 1. The straddle-type vehicle 1 is a two-wheeled motorcycle corresponding to one example of the straddle-type vehicle according to the invention. As illustrated in Fig. 1, the straddle-type vehicle 1 includes a front wheel 2, a rear wheel 3, the engine 11, the hydraulic pressure control unit 12, an input device 13, a surrounding environment sensor 14, an inertia measurement device (IMU) 15, a seating sensor 16, a gripping force sensor 17, a front wheel speed sensor 18, a rear wheel speed sensor 19, and a control device (ECU) 20.

The engine 11 corresponds to one example of a drive source of the straddle-type vehicle 1, and can output power to drive a drive wheel (specifically, the rear wheel 3). For example, one or a plurality of cylinders in which combustion chambers are formed, fuel injectors that inject fuel toward the combustion chambers, and spark plugs are provided to the engine 11. An air-fuel mixture containing air and the fuel is formed in the combustion chamber by injecting the fuel from the fuel injector, and the air-fuel mixture is ignited by the spark plug to undergo combustion. Therefore, a piston provided in the cylinder reciprocates, thereby rotating a crankshaft. In addition, a throttle valve is provided to an intake pipe of the engine 11, and the amount of intake air to the combustion chamber changes according to a throttle opening degree that is an opening degree of the throttle valve.

The hydraulic pressure control unit 12 is a unit having a function of controlling a braking force generated on the wheel. For example, the hydraulic pressure control unit 12 is provided on an oil path connecting a master cylinder and a wheel cylinder, and includes components (for example, control valves and a pump) for controlling the brake hydraulic pressure of the wheel cylinder. The braking force generated on the wheel is controlled by controlling the operation of the components of the hydraulic pressure control unit 12. Incidentally, details of a brake system 10 including the hydraulic pressure control unit 12 will be described later.

The input device 13 accepts various operations performed by the rider. The input device 13 is provided to, for example, a handlebar, and includes a push button and the like used for a rider's operation. Information regarding the rider's operation using the input device 13 is output to the control device 20.

The surrounding environment sensor 14 detects surrounding environment information regarding an environment around the straddle-type vehicle 1. Specifically, the surrounding environment sensor 14 is provided to a front portion of the straddle-type vehicle 1, and detects surrounding environment information in front of the straddle-type vehicle 1. The surrounding environment information detected by the surrounding environment sensor 14 is output to the control device 20.

The surrounding environment information detected by the surrounding environment sensor 14 may be information related to a distance or a direction to a subject located around the straddle-type vehicle 1 (for example, a relative position, a relative distance, a relative speed, a relative acceleration, or the like), or may be a characteristic of a subject located around the straddle-type vehicle 1 (for example, the type of the subject, the shape of the subject itself, a mark attached to the subject, or the like). The surrounding environment sensor 14 is, for example, a radar, a Lidar sensor, an ultrasonic sensor, a camera, or the like.

Incidentally, the surrounding environment information can also be detected by a surrounding environment sensor installed to another vehicle or infrastructure equipment. Namely, the control device 20 can also acquire the surrounding environment information via wireless communication with the other vehicle or the infrastructure equipment.

The inertia measurement device 15 includes a 3-axis gyro sensor and a 3-direction acceleration sensor, and detects a posture of the straddle-type vehicle 1. The inertia measurement device 15 is provided to, for example, a body of the straddle-type vehicle 1. For example, the inertia measurement device 15 detects a pitch angle of the straddle-type vehicle 1 with respect to a horizontal direction, and outputs the detection result. The inertia measurement device 15 may detect another physical quantity that can be substantially converted into the pitch angle of the straddle-type vehicle 1 with respect to the horizontal direction. The pitch angle corresponds to an angle representing the inclination of a vehicle body (specifically, the body) of the straddle-type vehicle 1 in a vertical direction. Therefore, the pitch angle of the straddle-type vehicle 1 with respect to the horizontal direction corresponds to an angle representing how much the vehicle body of the straddle-type vehicle 1 is rotated with respect to the horizontal direction in a pitch direction that is a rotation direction about an axis along a vehicle left-right direction. The inertia measurement device 15 may include only a part of the 3-axis gyro sensor and the 3-direction acceleration sensor.

The seating sensor 16 is provided to a rear seat of the straddle-type vehicle 1, and detects the presence or absence of a passenger or cargo on the rear seat.

The gripping force sensor 17 is provided to the handlebar, and detects a gripping force that is a force with which the rider grips the handlebar.

The front wheel speed sensor 18 is a wheel speed sensor that detects a wheel speed of the front wheel 2 (for example, a rotational frequency per unit time [rpm] or a movement distance per unit time [km/h] of the front wheel 2, or the like), and outputs the detection result. The front wheel speed sensor 18 may detect another physical quantity that can be substantially converted into the wheel speed of the front wheel 2. The front wheel speed sensor 18 is provided to the front wheel 2.

The rear wheel speed sensor 19 is a wheel speed sensor that detects a wheel speed of the rear wheel 3 (for example, a rotational frequency per unit time [rpm] or a movement distance per unit time [km/h] of the rear wheel 3, or the like), and outputs the detection result. The rear wheel speed sensor 19 may detect another physical quantity that can be substantially converted into the wheel speed of the rear wheel 3. The rear wheel speed sensor 19 is provided to the rear wheel 3.

The control device 20 controls the behavior of the straddle-type vehicle 1. For example, a part or the entirety of the control device 20 is composed of a microcomputer, a microprocessor unit, a memory, and the like. In addition, for example, a part or the entirety of the control device 20 may be composed of updatable one such as firmware, or may be a program module or the like executed by commands from a CPU or the like. For example, the control device 20 may be one device, or may be divided into a plurality of devices.

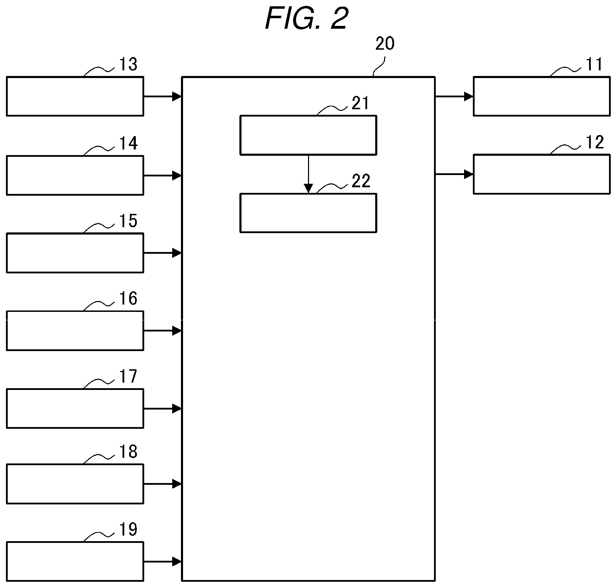

Fig. 2 is a block diagram illustrating one example of a functional configuration of the control device 20. As illustrated in Fig. 2, the control device 20 includes, for example, an acquisition section 21 and an execution section 22. In addition, the control device 20 communicates with each device of the straddle-type vehicle 1.

The acquisition section 21 acquires information from each device of the straddle-type vehicle 1, and outputs the information to the execution section 22. For example, the acquisition section 21 acquires information from the input device 13, the surrounding environment sensor 14, the inertia measurement device 15, the seating sensor 16, the gripping force sensor 17, the front wheel speed sensor 18, and the rear wheel speed sensor 19. Incidentally, in the present specification, acquiring information can include extracting or generating information (for example, calculation), and the like.

The execution section 22 executes various controls by controlling the operation of each device of the straddle-type vehicle 1. The execution section 22 controls, for example, the operation of the engine 11 and the hydraulic pressure control unit 12.

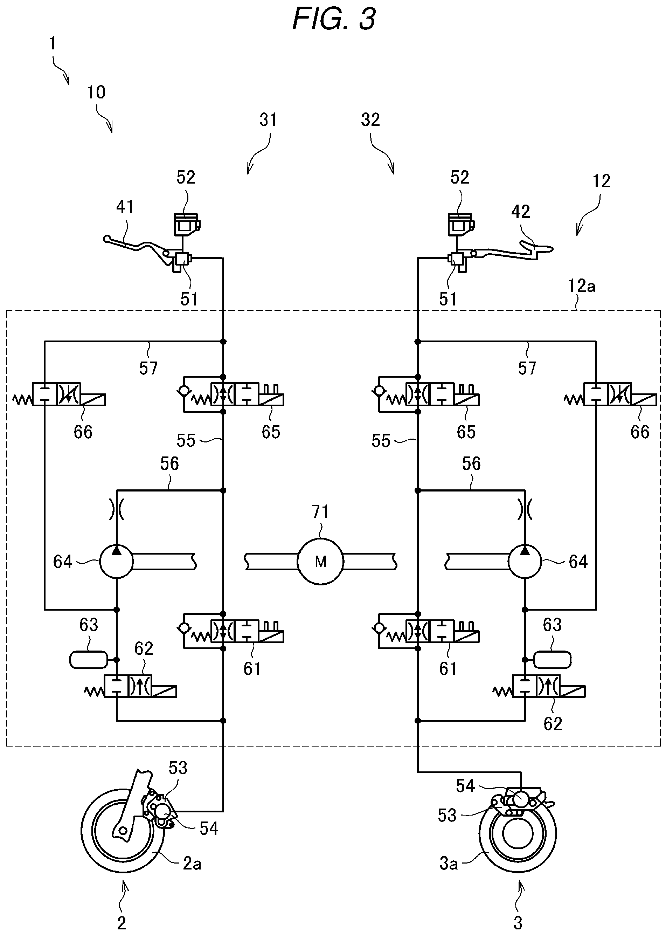

Here, a schematic configuration of the brake system 10 of the straddle-type vehicle 1 and control of a braking force generated in the straddle-type vehicle 1 will be described with reference to Fig. 3. Fig. 3 is a schematic diagram illustrating a schematic configuration of the brake system 10 of the straddle-type vehicle 1. As illustrated in Fig. 3, the brake system 10 includes a front wheel brake mechanism 31, a rear wheel brake mechanism 32, a first brake operating portion 41, and a second brake operating portion 42. The first brake operating portion 41 is, for example, a brake lever. The front wheel brake mechanism 31 brakes the front wheel 2 in conjunction with at least the first brake operating portion 41. The second brake operating portion 42 is, for example, a brake pedal. The rear wheel brake mechanism 32 brakes the rear wheel 3 in conjunction with at least the second brake operating portion 42. A part of the front wheel brake mechanism 31 and a part of the rear wheel brake mechanism 32 are included in the hydraulic pressure control unit 12.

Each of the front wheel brake mechanism 31 and the rear wheel brake mechanism 32 includes a master cylinder 51 with a built-in piston (not illustrated); a reservoir 52 attached to the master cylinder 51; a brake caliper 53 held by the body of the straddle-type vehicle 1 and including brake pads (not illustrated); a wheel cylinder 54 provided to the brake caliper 53; a main flow path 55 through which the brake fluid in the master cylinder 51 flows to the wheel cylinder 54; an auxiliary flow path 56 through which the brake fluid in the wheel cylinder 54 is released; and a supply flow path 57 through which the brake fluid in the master cylinder 51 is supplied to the auxiliary flow path 56.

An inlet valve (EV) 61 is provided to the main flow path 55. The auxiliary flow path 56 bypasses the main flow path 55 between a wheel cylinder 54 side and a master cylinder 51 side with respect to the inlet valve 61. An outlet valve (AV) 62, an accumulator 63, and a pump 64 are provided to the auxiliary flow path 56 in order from an upstream side. A first valve (USV) 65 is provided between an end portion on a master cylinder 51 side of the main flow path 55 and a location where a downstream end portion of the auxiliary flow path 56 is connected to the main flow path 55. The supply flow path 57 communicates between the master cylinder 51 and a suction side of the pump 64 in the auxiliary flow path 56. A second valve (HSV) 66 is provided to the supply flow path 57.

The inlet valve 61 is, for example, an electromagnetic valve that is opened in a non-energized state and that is closed in an energized state. The outlet valve 62 is, for example, an electromagnetic valve that is closed in a non-energized state and that is opened in an energized state. The first valve 65 is, for example, an electromagnetic valve that is opened in a non-energized state and that is closed in an energized state. The second valve 66 is, for example, an electromagnetic valve that is closed in a non-energized state and that is opened in an energized state.

In addition, a motor 71 that drives the pump 64 is provided to the hydraulic pressure control unit 12. In brake maintenance control to be described later, the pump 64 is driven by a driving force output from the motor 71, to automatically apply a braking force to the straddle-type vehicle 1. In such a manner, the motor 71 corresponds to one example of an actuator that generates a braking force in the straddle-type vehicle 1.

The hydraulic pressure control unit 12 includes components for controlling the brake hydraulic pressure which include the inlet valve 61, the outlet valve 62, the accumulator 63, the pump 64, the first valve 65, and the second valve 66; a substrate 12a to which these components are provided and in which flow paths constituting the main flow path 55, the auxiliary flow path 56, and the supply flow path 57 are formed; and the motor 71.

Incidentally, the substrate 12a may be formed of one member, or may be formed of a plurality of members. In addition, in a case where the substrate 12a is formed of a plurality of members, the components may be separately provided to different members.

The operation of the above-described components and the motor 71 of the hydraulic pressure control unit 12 is controlled by the execution section 22 of the control device 20. As a result, a braking force generated on the front wheel 2 by the front wheel brake mechanism 31 and a braking force generated on the rear wheel 3 by the rear wheel brake mechanism 32 are controlled.

In normal times (namely, when a setting is made to generate a braking force on the wheel in response to a brake operation performed by the rider), the control device 20 causes the inlet valve 61 to be opened, causes the outlet valve 62 to be closed, causes the first valve 65 to be opened, and causes the second valve 66 to be closed. In this state, when the first brake operating portion 41 is operated, in the front wheel brake mechanism 31, the piston (not illustrated) of the master cylinder 51 is pushed in to increase the hydraulic pressure of the brake fluid in the wheel cylinder 54, and the brake pads (not illustrated) of the brake caliper 53 are pressed against a rotor 2a of the front wheel 2 to generate a braking force on the front wheel 2. In addition, when the second brake operating portion 42 is operated, in the rear wheel brake mechanism 32, the piston (not illustrated) of the master cylinder 51 is pushed in to increase the hydraulic pressure of the brake fluid in the wheel cylinder 54, and the brake pads (not illustrated) of the brake caliper 53 are pressed against a rotor 3a of the rear wheel 3 to generate a braking force on the rear wheel 3.

Here, the execution section 22 can execute a positional relationship adjustment operation based on the surrounding environment information of the straddle-type vehicle 1. The positional relationship adjustment operation is an operation that adjusts the positional relationship between the straddle-type vehicle 1 and an object (for example, a target vehicle) to a target positional relationship. Specifically, in the positional relationship adjustment operation, the execution section 22 can adjust the positional relationship between the straddle-type vehicle 1 and the object to the target positional relationship by automatically controlling the speed of the straddle-type vehicle 1. Incidentally, hereinafter, an example in which the object is a target vehicle will be mainly described; however, the object is not limited to the target vehicle, and may be, for example, a traffic light or the like.

Hereinafter, an example in which adaptive cruise control is executed as the positional relationship adjustment operation will be described. However, the positional relationship adjustment operation may be an operation that adjusts the positional relationship between the straddle-type vehicle 1 and the object to the target positional relationship, or may be an operation other than the adaptive cruise control. For example, the positional relationship adjustment operation may be an operation which is not released even when an accelerator pedal operation is performed by the rider and in which the target positional relationship changes according to the operation amount of the accelerator pedal operation.

In the adaptive cruise control, the execution section 22 automatically controls the speed of the straddle-type vehicle 1 regardless of an acceleration/deceleration operation (namely, an accelerator pedal operation and a brake operation) performed by the rider. The execution section 22 can control the speed of the straddle-type vehicle 1, for example, based on speed information of the straddle-type vehicle 1 acquired based on the wheel speed of the front wheel 2 and the wheel speed of the rear wheel 3.

In the adaptive cruise control, for example, a target vehicle-to-vehicle distance that is the target value of a vehicle-to-vehicle distance between the straddle-type vehicle 1 and the target vehicle is set, and the execution section 22 controls the speed of the straddle-type vehicle 1 such that the vehicle-to-vehicle distance between the straddle-type vehicle 1 and the target vehicle is maintained at the target vehicle-to-vehicle distance. Namely, a positional relationship in which the vehicle-to-vehicle distance between the straddle-type vehicle 1 and the target vehicle becomes the target vehicle-to-vehicle distance corresponds to the target positional relationship. Incidentally, the vehicle-to-vehicle distance may refer to a distance in a direction along a lane (specifically, a travel lane of the straddle-type vehicle 1), or may refer to a straight distance. For example, the acquisition section 21 acquires the vehicle-to-vehicle distance between the straddle-type vehicle 1 and the target vehicle based on the surrounding environment information of the straddle-type vehicle 1, and the execution section 22 can control the speed of the straddle-type vehicle 1 as described above, based on the vehicle-to-vehicle distance acquired in such a manner.

However, in the adaptive cruise control, for example, a target passing time difference that is the target value of a passing time difference (specifically, a time it takes from a current time point until the straddle-type vehicle 1 passes the current position of the target vehicle) is set, and the execution section 22 may control the speed of the straddle-type vehicle 1 such that the passing time difference is maintained at the target passing time difference. In this case, a positional relationship in which the passing time difference becomes the target passing time difference corresponds to the target positional relationship. For example, the acquisition section 21 acquires the passing time difference based on the surrounding environment information of the straddle-type vehicle 1, and the execution section 22 can control the speed of the straddle-type vehicle 1 as described above, based on the passing time difference acquired in such a manner.

The execution section 22 starts the adaptive cruise control, for example, using an operation performed by the rider using the input device 13 as a trigger. Incidentally, the adaptive cruise control is canceled, for example, when a specific operation such as a brake operation is performed by the rider.

Here, as the positional relationship adjustment operation, an operation that is released when the speed of the straddle-type vehicle 1 decreases and becomes less than a reference speed may be used. On the other hand, in the embodiment of the invention, the positional relationship adjustment operation executed by the execution section 22 is an operation of which the release is not caused by the above-described decrease in speed. Therefore, in the positional relationship adjustment operation according to the embodiment of the invention, the execution section 22 can cause the straddle-type vehicle 1 to automatically stop and start.

For example, in the adaptive cruise control, the execution section 22 executes a first phase in which the straddle-type vehicle 1 is automatically decelerated and stopped, a second phase in which the brake maintenance control that maintains a state where a braking force is automatically applied to the stopped straddle-type vehicle 1 is executed, and a third phase in which the straddle-type vehicle 1 is automatically started in response to an acquisition of a start trigger signal, in order.

In the first phase, the straddle-type vehicle 1 automatically stops. In the first phase, the execution section 22 causes the straddle-type vehicle 1 to automatically decelerate and stop, for example, based on the surrounding environment information of the straddle-type vehicle 1. For example, when the target vehicle decelerates and stops, the execution section 22 causes the straddle-type vehicle 1 to automatically decelerate and stop such that the vehicle-to-vehicle distance between the straddle-type vehicle 1 and the target vehicle is maintained at the target vehicle-to-vehicle distance, based on the surrounding environment information of the straddle-type vehicle 1.

However, in the first phase, the execution section 22 may cause the straddle-type vehicle 1 to automatically decelerate and stop without being based on the surrounding environment information of the straddle-type vehicle 1. For example, when a specific operation is performed by the rider using the input device 13, the execution section 22 may cause the straddle-type vehicle 1 to automatically decelerate and stop.

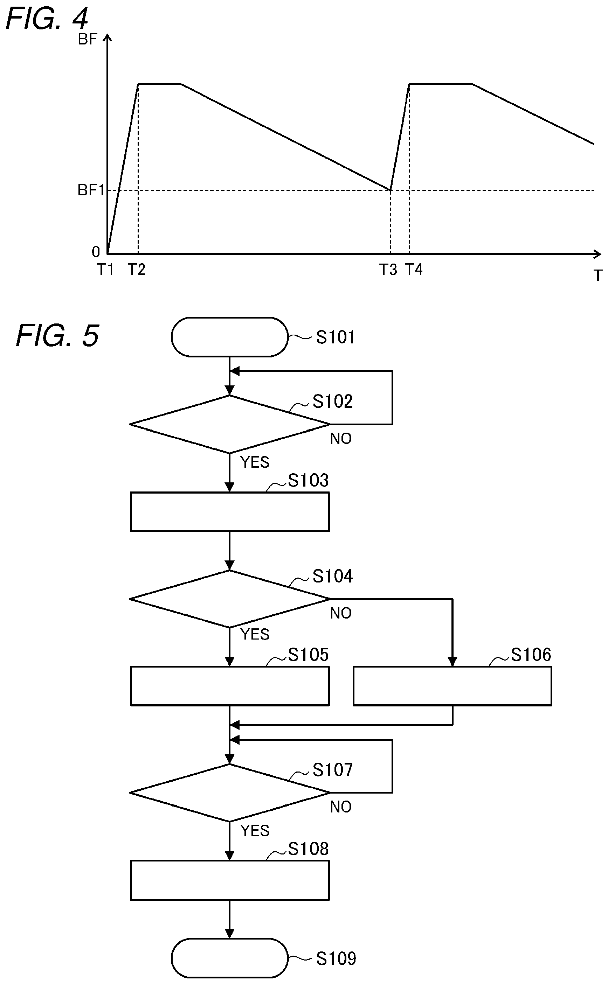

In the second phase, the brake maintenance control is executed, and a state where a braking force is automatically applied to the stopped straddle-type vehicle 1 is maintained. As a result, the movement (for example, sliding down due to its own weight) of the stopped straddle-type vehicle 1 is suppressed. In the brake maintenance control, the execution section 22 can control the braking force applied to the straddle-type vehicle 1, by controlling the operation of the hydraulic pressure control unit 12. Incidentally, details of the brake maintenance control will be described later with reference to Fig. 4.

In the brake maintenance control, for example, the execution section 22 causes only the rear wheel 3 out of the front wheel 2 and the rear wheel 3 to be braked. However, the wheel braked in the brake maintenance control is not limited to this example, and for example, both the front wheel 2 and the rear wheel 3 may be braked. In addition, the brake system 10 has been described above with reference to Fig. 3; however, the example of Fig. 3 is merely one example, and the configuration of the brake system 10 is not limited to the example of Fig. 3. For example, the hydraulic pressure control unit 12 may control only the braking force generated on one of the front wheel 2 and the rear wheel 3.

In the third phase, the straddle-type vehicle 1 automatically starts. In the third phase, for example, the execution section 22 acquires a start trigger signal based on the surrounding environment information of the straddle-type vehicle 1, and causes the straddle-type vehicle 1 to automatically start in response to the acquisition of the start trigger signal. For example, when the stopped target vehicle starts, a start trigger signal is acquired based on the surrounding environment information of the straddle-type vehicle 1, and the execution section 22 causes the straddle-type vehicle 1 to automatically start such that the vehicle-to-vehicle distance between the straddle-type vehicle 1 and the target vehicle is maintained at the target vehicle-to-vehicle distance.

However, in the third phase, the execution section 22 may acquire a start trigger signal without being based on the surrounding environment information of the straddle-type vehicle 1. For example, when a specific operation is performed by the rider using the input device 13, the execution section 22 may acquire a start trigger signal.

### <Operation of control device>

The operation of the control device 20 according to the embodiment of the invention will be described with reference to Figs. 4 to 7.

As described above, the control device 20 executes the brake maintenance control in the second phase during execution of the adaptive cruise control. Here, details of the brake maintenance control will be described with reference to Fig. 4.

Fig. 4 is a diagram illustrating one example of the transition of a braking force BF applied to the straddle-type vehicle 1 in the brake maintenance control. In Fig. 4, the horizontal axis is a time axis T, and the transition of the braking force BF applied to the straddle-type vehicle 1 is illustrated.

Incidentally, in an example of Fig. 4 to be described below, the braking force BF becomes zero after the straddle-type vehicle 1 is stopped, and the braking force BF is generated by the brake maintenance control. However, the brake maintenance control may be started in a state where the braking force BF is generated after the straddle-type vehicle 1 is stopped. In addition, in the brake maintenance control, the braking force BF may be larger or smaller than after the straddle-type vehicle 1 is stopped.

In the example of Fig. 4, at time point T1, the brake maintenance control is started. When the brake maintenance control is started, for example, the execution section 22 sets a state where the inlet valve 61 is opened, the outlet valve 62 is closed, the first valve 65 is closed, and the second valve 66 is opened, and operates the motor 71 to drive the pump 64. As a result, after time point T1, the hydraulic pressure of the brake fluid in the wheel cylinder 54 increases, and the braking force BF applied to the straddle-type vehicle 1 increases.

Then, after time point T1, at time point T2 at which the braking force BF increases to a certain extent, the execution section 22 stops the motor 71, and for example, sets a state where both the first valve 65 and the second valve 66 are closed. As a result, after time point T2, the hydraulic pressure of the brake fluid in the wheel cylinder 54 is maintained, and the braking force BF applied to the straddle-type vehicle 1 is maintained. Here, in the hydraulic pressure control unit 12, a phenomenon in which the flow of the brake fluid is not completely blocked by the closed control valves and the brake fluid leaks little by little through the control valves occurs. Therefore, as illustrated in Fig. 4, after time point T2, the braking force BF applied to the straddle-type vehicle 1 is maintained and then decreases over time.

Therefore, in the brake maintenance control, the execution section 22 controls the braking force BF such that the braking force BF applied to the straddle-type vehicle 1 does not become less than a first braking force BF1. The first braking force BF1 is set to a magnitude that can sufficiently suppress the movement of the stopped straddle-type vehicle 1. For example, the execution section 22 predicts time point T3 at which the braking force BF decreases to the first braking force BF1, based on a time elapsed from time point T2, and at time point T3, causes the braking force BF to start increasing. Incidentally, when a sensor that detects a pressure of the brake fluid (for example, a pressure of the brake fluid in the wheel cylinder 54) is provided to the straddle-type vehicle 1, the execution section 22 may predict time point T3 at which the braking force BF decreases to the first braking force BF1, based on the detection result of the sensor.

In the example of Fig. 4, after time point T2, at time point T3 at which the braking force BF decreases to the first braking force BF1, for example, the execution section 22 sets a state where the first valve 65 is closed and the second valve 66 is opened, and operates the motor 71 again to drive the pump 64 again. As a result, after time point T3, the hydraulic pressure of the brake fluid in the wheel cylinder 54 increases, and the braking force BF applied to the straddle-type vehicle 1 increases. Then, after time point T3, at time point T4 at which the braking force BF increases to a certain extent, the execution section 22 stops the motor 71, and for example, sets a state where both the first valve 65 and the second valve 66 are closed.

Even after time point T4, the motor 71 is operated again every time the braking force BF decreases to the first braking force BF1, so that the motor 71 is repeatedly operated at certain time intervals. As described above, in the brake maintenance control, the motor 71 needs to be repeatedly operated to prevent the braking force BF, which is applied to the straddle-type vehicle 1, from falling below the first braking force BF1.

The repeated operation of the motor 71 in such a manner becomes a factor causing a decrease in the life span of the motor 71. Therefore, in the embodiment of the invention, in the second phase, when a release condition is satisfied before a start trigger signal is acquired in a situation where the brake maintenance control is executed, the execution section 22 of the control device 20 executes a release operation that automatically releases the braking force BF applied to the straddle-type vehicle 1. As a result, as will be described later, suppressing a decrease in the life span of the actuator (in the above example, the motor 71) of the straddle-type vehicle 1 is achieved. Hereinafter, a first processing, a second process, and a third process will be described in order as examples of processes related to the release operation performed by the control device 20.

Fig. 5 is a flowchart illustrating one example of the flow of the first process performed by the control device 20. Step S101 in Fig. 5 corresponds to the start of a control flow illustrated in Fig. 5. Step S109 in Fig. 5 corresponds to the end of the control flow illustrated in Fig. 5. The control flow illustrated in Fig. 5 is executed, for example, when the brake maintenance control is started.

When the control flow illustrated in Fig. 5 is started, in step S102, the execution section 22 determines whether the detection value of the inertia measurement device 15 is stabilized.

In step S102, for example, when the time elapsed from the time point at which the straddle-type vehicle 1 is stopped reaches an assumed time at which it is assumed that the posture of the straddle-type vehicle 1 is stabilized and the detection value of the inertia measurement device 15 is stabilized, the execution section 22 determines that the detection value of the inertia measurement device 15 is stabilized. On the other hand, when the time elapsed from the time point at which the straddle-type vehicle 1 is stopped does not reach the assumed time, the execution section 22 determines that the detection value of the inertia measurement device 15 is not stabilized.

When it is determined that the detection value of the inertia measurement device 15 is not stabilized (step S102: NO), step S102 is repeated. On the other hand, when it is determined that the detection value of the inertia measurement device 15 is stabilized (step S102: YES), the process proceeds to step S103.

When YES is determined in step S102, in step S103, the acquisition section 21 acquires gradient information of a road surface based on the detection result of the inertia measurement device 15.

For example, the gradient information of the road surface may be information indicating the value of the gradient of the road surface on which the straddle-type vehicle 1 is stopped, may be rough information in which the degree of the gradient is expressed in several stages, or may be information that can be substantially converted into such information. In the example of Fig. 5, when it is determined that the detection value of the inertia measurement device 15 is stabilized, the gradient information of the road surface is acquired based on the detection result of the inertia measurement device 15. Therefore, the gradient information of the road surface can be accurately acquired.

Incidentally, from the viewpoint of more accurately acquiring the gradient information of the road surface, it is preferable that the acquisition section 21 acquires the gradient information of the road surface based on other information in addition to the detection result of the inertia measurement device 15. Examples of the other information include at least one of passenger information and cargo information of the straddle-type vehicle 1. For example, the acquisition section 21 can acquire information indicating the presence or absence of a passenger on the rear seat and information indicating the presence or absence of a cargo on the rear seat as the passenger information and the cargo information, respectively, based on the detection result of the seating sensor 16. For example, the acquisition section 21 can estimate an inclination of the straddle-type vehicle 1 in a pitch direction with respect to the road surface based on at least one of the passenger information and the cargo information, and can acquire the gradient information of the road surface taking the inclination into consideration. Incidentally, the passenger information may be information regarding a passenger of the straddle-type vehicle 1, and for example, may be information such as the number of passengers or the weight of each passenger. In addition, the cargo information may be information regarding a cargo of the straddle-type vehicle 1, and for example, may be information such as the number of cargos or the weight of each cargo.

Subsequently to step S103, in step S104, the execution section 22 determines whether the absolute value of the gradient of the road surface on which the straddle-type vehicle 1 is stopped is smaller than a reference (for example, a reference value), based on the gradient information acquired in step S103.

The reference is set, for example, such that it can be determined whether the absolute value of the gradient of the road surface is small enough that the own weight of the straddle-type vehicle 1 can be comfortably supported by the legs of the rider. In this case, a case where the absolute value of the gradient of the road surface on which the straddle-type vehicle 1 is stopped is smaller than the reference corresponds to the case where the absolute value of the gradient of the road surface is small enough that the own weight of the straddle-type vehicle 1 can be comfortably supported by the legs of the rider.

When it is determined that the absolute value of the gradient of the road surface on which the straddle-type vehicle 1 is stopped is smaller than the reference (step S104: YES), the process proceeds to step S105. Then, in step S105, the execution section 22 switches the setting of a reference time to a first setting. On the other hand, it is determined that the absolute value of the gradient of the road surface on which the straddle-type vehicle 1 is stopped is larger than the reference (step S104: NO), the process proceeds to step S106. Then, in step S106, the execution section 22 switches the setting of the reference time to a second setting.

As will be described later, in the control flow of Fig. 5, when it is determined that the duration of the brake maintenance control (namely, a time elapsed from the start of the brake maintenance control) exceeds the reference time, the release operation that automatically releases the braking force BF applied to the straddle-type vehicle 1 is executed. In the brake maintenance control, the reference time is set, and the execution timing of the release operation changes depending on the setting of the reference time. The reference time set to the first setting is shorter than the reference time set to the second setting. Namely, when the absolute value of the gradient of the road surface on which the straddle-type vehicle 1 is stopped is smaller than the reference, the release operation is executed at an earlier timing than when the absolute value of the gradient of the road surface is larger than the reference.

Subsequently to step S105 or step S106, in step S107, the execution section 22 determines whether the duration of the brake maintenance control exceeds the reference time.

When it is determined that the duration of the brake maintenance control does not exceed the reference time (step S107: NO), step S107 is repeated. On the other hand, when it is determined that the duration of the brake maintenance control exceeds the reference time (step S107: YES), the process proceeds to step S108.

When YES is determined in step S107, in step S108, the execution section 22 executes the release operation, and ends the control flow illustrated in Fig. 5.

As described above, in the release operation, the execution section 22 causes the braking force BF, which is applied to the straddle-type vehicle 1, to be automatically released. In the release operation, the execution section 22 causes the braking force BF, which is applied to the straddle-type vehicle 1, to decrease, for example, by stopping the motor 71 and the pump 64, causing the first valve 65 to be opened, and causing the state of the hydraulic pressure control unit 12 to return to a normal state. Incidentally, the execution section 22 can adjust the decrease speed of the braking force BF, for example, by adjusting the rate of a change in the opening degree of the first valve 65 when the motor 71 and the pump 64 are stopped and the first valve 65 is opened.

Here, from the viewpoint of optimizing the braking force BF applied to the straddle-type vehicle 1 in the release operation, it is preferable that in the release operation, the execution section 22 controls the braking force BF applied to the straddle-type vehicle 1, based on various information.

For example, in the release operation, the execution section 22 may control the braking force BF applied to the straddle-type vehicle 1, based on the gradient information of the road surface. For example, when the absolute value of the gradient of the road surface on which the straddle-type vehicle 1 is stopped is large, the execution section 22 causes the decrease speed of the braking force BF to be reduced in the release operation, compared to when the absolute value of the gradient of the road surface is small. As a result, when the absolute value of the gradient of the road surface is large and the influence of its own weight on the behavior of the straddle-type vehicle 1 is large, a sudden change in the braking force BF can be suppressed, and a sudden change in the behavior of the straddle-type vehicle 1 can be suppressed.

In addition, for example, in the release operation, the execution section 22 may control the braking force BF applied to the straddle-type vehicle 1, based on at least one of the passenger information and the cargo information of the straddle-type vehicle 1. For example, when there is a passenger or a cargo on the rear seat, the execution section 22 causes the decrease speed of the braking force BF to be reduced in the release operation, compared to when there is no passenger or cargo on the rear seat. As a result, when there is a passenger or a cargo on the rear seat, and the behavior of the straddle-type vehicle 1 is likely to change due to the weight of the passenger or the cargo, a sudden change in the braking force BF can be suppressed, and a sudden change in the behavior of the straddle-type vehicle 1 can be suppressed.

In addition, for example, in the release operation, the execution section 22 may control the braking force BF applied to the straddle-type vehicle 1, based on riding state information of the rider of the straddle-type vehicle 1. For example, the acquisition section 21 can acquire gripping state information of the handlebar (for example, information indicating a gripping force exerted on the handlebar by the rider, information indicating whether the handlebar is gripped by the rider, or the like) of the straddle-type vehicle 1 as the riding state information, based on the detection result of the gripping force sensor 17. Incidentally, the riding state information may be information regarding the riding state of the rider of the straddle-type vehicle 1, and for example, may be posture information of the rider (for example, information indicating whether the foot of the rider is on a step of the brake pedal, or the like).

For example, when the handlebar is not gripped by the rider, the execution section 22 causes the decrease speed of the braking force BF to be reduced in the release operation, compared to when the handlebar is gripped by the rider. As a result, when the rider is not ready for brake operation, a sudden change in the braking force BF can be suppressed, and a sudden change in the behavior of the straddle-type vehicle 1 can be suppressed.

In addition, for example, in the release operation, the execution section 22 may control the braking force BF applied to the straddle-type vehicle 1, based on the surrounding environment information of the straddle-type vehicle 1. For example, when the straddle-type vehicle 1 is stopped on a downhill road, or when the vehicle-to-vehicle distance between the straddle-type vehicle 1 and a front vehicle (vehicle located in front of the straddle-type vehicle 1) is short, the execution section 22 causes the decrease speed of the braking force BF to be reduced in the release operation, compared to when the vehicle-to-vehicle distance is long. In addition, for example, when the straddle-type vehicle 1 is stopped on an uphill road, or when the vehicle-to-vehicle distance between the straddle-type vehicle 1 and a rear vehicle (vehicle located behind the straddle-type vehicle 1) is short, the execution section 22 causes the decrease speed of the braking force BF to be reduced in the release operation, compared to when the vehicle-to-vehicle distance is long. As a result, when the vehicle-to-vehicle distance between the straddle-type vehicle 1 and the front vehicle or the rear vehicle is short, a sudden change in the braking force BF can be suppressed, and contact with other vehicles due to a sudden change in the behavior of the straddle-type vehicle 1 can be suppressed.

In addition, for example, in the release operation, the execution section 22 may control the braking force BF applied to the straddle-type vehicle 1, based on vehicle body behavior information of the straddle-type vehicle 1. For example, the acquisition section 21 can acquire information indicating whether the straddle-type vehicle 1 slides down, as the vehicle body behavior information, based on the speed of the straddle-type vehicle 1. Incidentally, the vehicle body behavior information may be information regarding the speed of the straddle-type vehicle 1 as described above, or may be other information (for example, information regarding the acceleration of the straddle-type vehicle 1).

For example, when the straddle-type vehicle 1 slides down at at least one time point after the straddle-type vehicle 1 is stopped, the execution section 22 causes the decrease speed of the braking force BF to be reduced in the release operation, compared to when the straddle-type vehicle 1 does not slide down after the straddle-type vehicle 1 is stopped. The case where the straddle-type vehicle 1 slides down at at least one time point after the straddle-type vehicle 1 is stopped corresponds to a case where the behavior of the straddle-type vehicle 1 is likely to change along with the release of the braking force BF. Therefore, in such a case, by reducing the decrease speed of the braking force BF, a sudden change in the braking force BF can be suppressed, and a sudden change in the behavior of the straddle-type vehicle 1 can be suppressed.

Examples of the information used to control the braking force BF in the release operation have been described above. However, the control of the braking force BF in the release operation may be performed based on information other than the examples listed above. In addition, the control of the braking force BF in the release operation may be performed using a combination of a plurality types of information. For example, the control of the braking force BF in the release operation may be performed using a combination of a plurality types of information optionally selected from the examples listed above.

As described above, in the first process, the release condition (namely, an execution condition for the release operation) is a condition related to time. Specifically, the release condition in the first process is the condition that the duration of the brake maintenance control exceeds the reference time. Then, in the first process, when the above-described release condition is satisfied before a start trigger signal is acquired in a situation where the brake maintenance control is executed, the release operation that automatically releases the braking force BF applied to the straddle-type vehicle 1 is executed. In such a manner, by using the condition related to time as the release condition, the execution of the brake maintenance control for an excessively long time can be suppressed, and a decrease in the life span of the motor 71 can be appropriately suppressed. Here, in the straddle-type vehicle 1, unlike a four-wheeled automobile or the like, since the own weight of the vehicle can also be supported by the legs of the rider, the release operation can be executed before the start trigger signal is acquired.

However, the condition related to time, which is used as the release condition, is not limited to the above example. For example, the condition related to time may be that the time elapsed from a timing shifted by a predetermined time with respect to the start timing of the brake maintenance control exceeds the reference time.

In the above example, the execution section 22 changes the release condition based on the gradient information of the road surface. Specifically, the execution section 22 switches the setting of the reference time depending on whether the absolute value of the gradient of the road surface on which the straddle-type vehicle 1 is stopped is smaller than the reference. As a result, the release condition can be optimized depending on the influence of the own weight of the straddle-type vehicle 1 on the behavior of the straddle-type vehicle 1. For example, when the absolute value of the gradient of the road surface is small (for example, when the straddle-type vehicle 1 is stopped on a flat road), the own weight of the straddle-type vehicle 1 is easily supported by the legs of the rider. In such a case, the start timing of the release operation can be brought forward by shortening the reference time.

Here, the execution section 22 may prohibit the release operation based on the gradient information of the road surface. For example, the execution section 22 may permit the release operation when the absolute value of the gradient of the road surface on which the straddle-type vehicle 1 is stopped is smaller than the reference, and may prohibit the release operation when the absolute value of the gradient is larger than the reference. As a result, for example, when the absolute value of the gradient of the road surface is large and the influence of the own weight of the straddle-type vehicle 1 on the behavior of the straddle-type vehicle 1 is large, the release operation can be prohibited, and a sudden change in the behavior of the straddle-type vehicle 1 can be suppressed.

As described above, the execution section 22 may change the release condition or may prohibit the release operation based on the gradient information of the road surface. However, the execution section 22 may change the release condition or may prohibit the release operation based on information other than the gradient information of the road surface.

For example, the execution section 22 may change the release condition or may prohibit the release operation based on at least one of the passenger information and the cargo information of the straddle-type vehicle 1. For example, the execution section 22 may switch the setting of the reference time to the first setting when there is no passenger or cargo on the rear seat, and may switch the setting of the reference time to the second setting when there is a passenger or a cargo on the rear seat. As a result, the release condition can be optimized depending on how likely the behavior of the straddle-type vehicle 1 is to change due to the weight of the passenger or the cargo. In addition, for example, the execution section 22 may permit the release operation when there is no passenger or cargo on the rear seat, and may prohibit the release operation when there is a passenger or a cargo on the rear seat. As a result, when there is a passenger or a cargo on the rear seat, and the behavior of the straddle-type vehicle 1 is likely to change due to the weight of the passenger or the cargo, the release operation can be prohibited, and a sudden change in the behavior of the straddle-type vehicle 1 can be suppressed.

In addition, for example, the execution section 22 may change the release condition or may prohibit the release operation based on the riding state information of the rider of the straddle-type vehicle 1. For example, the execution section 22 may switch the setting of the reference time to the first setting when the handlebar is gripped by the rider, and may switch the setting of the reference time to the second setting when the handlebar is not gripped by the rider. As a result, the release condition can be optimized depending on whether the rider is ready for brake operation. In addition, for example, the execution section 22 may permit the release operation when the handlebar is gripped by the rider, and may prohibit the release operation when the handlebar is not gripped by the rider. As a result, when the rider is not ready for brake operation, the release operation can be prohibited, and a sudden change in the behavior of the straddle-type vehicle 1 can be suppressed.

In addition, for example, the execution section 22 may change the release condition or may prohibit the release operation based on the surrounding environment information of the straddle-type vehicle 1. For example, the execution section 22 may switch the setting of the reference time to the first setting when the vehicle-to-vehicle distance between the straddle-type vehicle 1 and another vehicle (specifically, a front vehicle when the straddle-type vehicle 1 is stopped on a downhill road, or a rear vehicle when the straddle-type vehicle 1 is stopped on an uphill road) is longer than a reference distance, and may switch the setting of the reference time to the second setting when the vehicle-to-vehicle distance is shorter than the reference distance. As a result, the release condition can be optimized depending on the possibility of contact with another vehicle when the release operation is executed. In addition, for example, the execution section 22 may permit the release operation when the vehicle-to-vehicle distance is longer than the reference distance, and may prohibit the release operation when the vehicle-to-vehicle distance is shorter than the reference distance. As a result, contact with another vehicle due to a sudden change in the behavior of the straddle-type vehicle 1 in response to the release operation can be suppressed.

Examples of the information used to change the release condition or prohibit the release operation have been described above. However, the information used to change the release condition or prohibit the release operation may be information other than the examples listed above. In addition, the execution section 22 may change the release condition or may prohibit the release operation using a combination of a plurality types of information. For example, the execution section 22 may change the release condition or may prohibit the release operation using a combination of a plurality types of information optionally selected from the examples listed above. Incidentally, an example in which the release condition is changed in two stages has been described above; however, the release condition may be changed in more stages (namely, in three or more stages) or may be continuously changed.

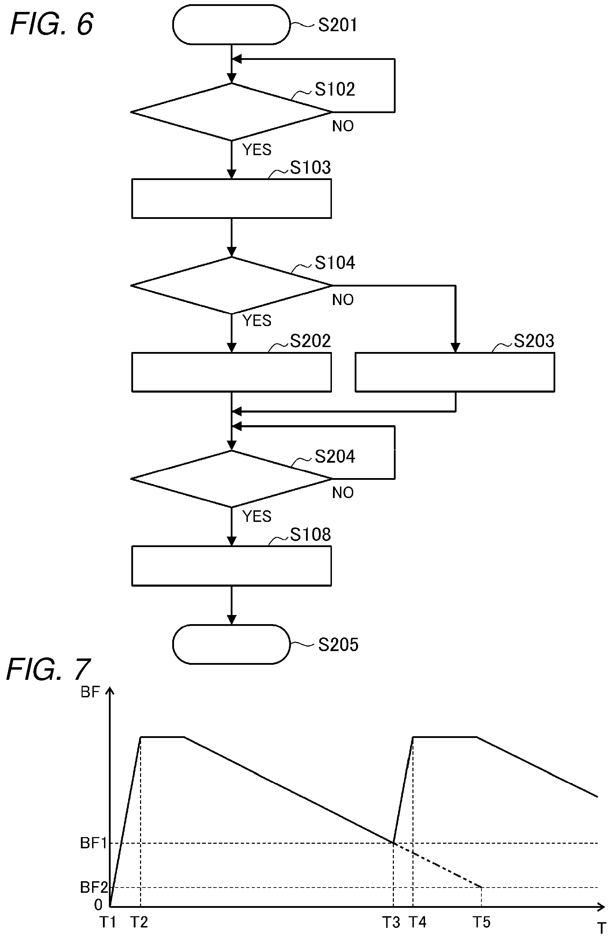

Fig. 6 is a flowchart illustrating one example of the flow of the second process performed by the control device 20. Step S201 in Fig. 6 corresponds to the start of a control flow illustrated in Fig. 6. Step S205 in Fig. 6 corresponds to the end of the control flow illustrated in Fig. 6. The control flow illustrated in Fig. 6 is executed, for example, when the brake maintenance control is started.

The second process of Fig. 6 differs from the first process of Fig. 5 described above in that steps S105, S106, and S107 are replaced with steps S202, S203, and S204, respectively.

In the second process of Fig. 6, when YES is determined in step S104 (namely, when it is determined that the absolute value of the gradient of the road surface on which the straddle-type vehicle 1 is stopped is smaller than the reference), the process proceeds to step S202. Then, in step S202, the execution section 22 switches the setting of a reference number of operations to the first setting. On the other hand, when NO is determined in step S104 (namely, when it is determined that the absolute value of the gradient of the road surface on which the straddle-type vehicle 1 is stopped is larger than the reference), the process proceeds to step S203. Then, in step S203, the execution section 22 switches the setting of the reference number of operations to the second setting.

As will be described later, in the control flow of Fig. 6, when it is determined that the number of operations of the motor 71 is more than the reference number of operations, the release operation that automatically releases the braking force BF applied to the straddle-type vehicle 1 is executed. In the brake maintenance control, the reference number of operations is set, and the execution timing of the release operation changes depending on the setting of the reference number of operations. The reference number of operations set to the first setting is smaller than the reference number of operations set to the second setting. Namely, when the absolute value of the gradient of the road surface on which the straddle-type vehicle 1 is stopped is smaller than the reference, the release operation is executed at an earlier timing than when the absolute value of the gradient of the road surface is larger than the reference.

Subsequently to step S202 or step S203, in step S204, the execution section 22 determines whether the number of operations of the motor 71 is more than the reference number of operations.

When it is determined that the number of operations of the motor 71 is not more than the reference number of operations (step S204: NO), step S204 is repeated. On the other hand, when it is determined that the number of operations of the motor 71 is more than the reference number of operations (step S204: YES), the process proceeds to step S108.

When YES is determined in step S204, in step S108, the execution section 22 executes the release operation, and ends the control flow illustrated in Fig. 6.

As described above, in the second process, the release condition (namely, an execution condition for the release operation) is a condition related to operation status information of the motor 71. Specifically, in the second process, information indicating the number of operations of the motor 71 is used as the operation status information, and the release condition in the second process is the condition that the number of operations of the motor 71 is more than the reference number of operations. Then, in the second process, when the above-described release condition is satisfied before a start trigger signal is acquired in a situation where the brake maintenance control is executed, the release operation that automatically releases the braking force BF applied to the straddle-type vehicle 1 is executed. In such a manner, by using the condition related to the operation status information of the motor 71 as the release condition, the excessive operation of the brake maintenance control can be suppressed, and a decrease in the life span of the motor 71 can be appropriately suppressed.

However, the condition related to the operation status information, which is used as the release condition, is not limited to the above example. The operation status information may be information regarding the operation status of the motor 71. For example, information indicating the operation time of the motor 71 may be used as the operation status information, and the condition that the operation time of the motor 71 is more than a reference operation time may be used as the release condition.

Incidentally, in the second process of Fig. 6 as well, similarly to the first process of Fig. 5, from the viewpoint of optimizing the braking force BF applied to the straddle-type vehicle 1 in the release operation, in the release operation, the execution section 22 may control the braking force BF applied to the straddle-type vehicle 1, based on various information (for example, the information provided as examples in the description of the first process). In addition, in the second process of Fig. 6 as well, similarly to the first process of Fig. 5, the execution section 22 may prohibit the release operation based on the gradient information of the road surface. In addition, in the second process of Fig. 6, similarly to the first process of Fig. 5, the execution section 22 may change the release condition or may prohibit the release operation based on information other than the gradient information of the road surface (for example, the information provided as examples in the description of the first process). In the second process, the execution section 22 can change the release condition and change the ease of executing the release operation, for example, by changing the setting of the number of operations of the motor 71. In addition, the execution section 22 may change the release condition or may prohibit the release operation using a combination of a plurality types of information.

Fig. 7 is a diagram for describing the third process performed by the control device 20. In Fig. 7, similarly to Fig. 4, the horizontal axis is the time axis T, and the transition of the braking force BF applied to the straddle-type vehicle 1 is illustrated.

In the third process, a release condition (namely, an execution condition for the release operation) is different from those of the first process and the second process described above. In the third process, a condition related to the vehicle body behavior information of the straddle-type vehicle 1 is used as the release condition. Specifically, in the third process, in the brake maintenance control, the execution section 22 executes the release operation based on whether the straddle-type vehicle 1 slides down in a process in which the braking force BF applied to the straddle-type vehicle 1 decreases over time.

In an example of Fig. 7, similarly to the example of Fig. 4, at time point T1, the brake maintenance control is started. As a result, between time point T1 and time point T2, the motor 71 operates to drive the pump 64, and the braking force BF applied to the straddle-type vehicle 1 increases. Then, at time point T2, the motor 71 stops. After time point T2, the braking force BF applied to the straddle-type vehicle 1 is maintained and then decreases over time.

Here, in the third process, at time point T3 at which the braking force BF decreases to the first braking force BF1, the execution section 22 does not operate the motor 71 again, and as illustrated by a two-dot chain line in Fig. 7, causes the braking force BF to decrease to a second braking force BF2 smaller than the first braking force BF1. Then, at time point T5 at which the braking force BF decreases to the second braking force BF2, the execution section 22 determines whether the straddle-type vehicle 1 slides down.

At time point T5, when the straddle-type vehicle 1 slides down, the execution section 22 operates the motor 71 again to increase the braking force BF. In this case, after time point T5, the execution section 22 controls the braking force BF such that the braking force BF does not become less than the first braking force BF1. On the other hand, at time point T5, when the straddle-type vehicle 1 does not slide down, the execution section 22 executes the release operation that automatically releases the braking force BF.

As described above, in the third process, the release condition (namely, the execution condition for the release operation) is a condition related to the vehicle body behavior information of the straddle-type vehicle 1. Specifically, the release condition in the third process is the condition that the straddle-type vehicle 1 does not slide down in a process in which the braking force BF applied to the straddle-type vehicle 1 decreases over time. Then, in the third process, when the above-described release condition is satisfied before a start trigger signal is acquired in a situation where the brake maintenance control is executed, the release operation that automatically releases the braking force BF applied to the straddle-type vehicle 1 is executed. In such a manner, by using the condition related to the vehicle body behavior information of the straddle-type vehicle 1 as the release condition, unnecessarily operating the motor 71 again can be suppressed, and a decrease in the life span of the motor 71 can be appropriately suppressed.

However, the condition related to the vehicle body behavior information, which is used as the release condition, is not limited to the above example. For example, in the above example, after the motor 71 is operated once with the start of the brake maintenance control, and before the motor 71 is operated again, the execution section 22 causes the braking force BF to decrease to the second braking force BF2, and executes the release operation depending on whether the straddle-type vehicle 1 slides down. However, after the start of the brake maintenance control and after the motor 71 is operated again (for example, after the motor 71 is operated a predetermined number of times), the execution section 22 may cause the braking force BF to decrease to the second braking force BF2, and may execute the release operation depending on whether the straddle-type vehicle 1 slides down.

Incidentally, in the third process of Fig. 7 as well, similarly to the first process of Fig. 5 and the second process of Fig. 6, from the viewpoint of optimizing the braking force BF applied to the straddle-type vehicle 1 in the release operation, in the release operation, the execution section 22 may control the braking force BF applied to the straddle-type vehicle 1, based on various information (for example, the information provided as examples in the description of the first process). In addition, in the third process of Fig. 7 as well, similarly to the first process of Fig. 5 and the second process of Fig. 6, the release condition may be changed or the release operation may be prohibited based on various information such as the gradient information of the road surface (for example, the information provided as examples in the description of the first process). In the third process, the execution section 22 can change the release condition and change the ease of executing the release operation, for example, by changing the second braking force BF2. In addition, the execution section 22 may change the release condition or may prohibit the release operation using a combination of a plurality types of information.

The first process, the second process, and the third process have been described above as examples of processes performed by the control device 20. However, the processes performed by the control device 20 may be processes that are changed from the examples of processes described above.

For example, in the flowcharts of Figs. 5 and 6, the acquisition section 21 acquires the gradient information of the road surface based on the detection result of the inertia measurement device 15. However, the acquisition section 21 may acquire the gradient information of the road surface based on the vehicle body behavior information of the straddle-type vehicle 1. For example, the acquisition section 21 may estimate a gradient of the road surface depending on whether the straddle-type vehicle 1 slides down immediately after the start of the brake maintenance control, and may acquire the estimation result as gradient information.

In addition, for example, in the flowchart of Fig. 5 or 6, a process of setting the reference time or the reference number of operations to a provisional setting (for example, the first setting) may be added before step S102, step S103, or step S104. In addition, for example, in the flowchart of Fig. 5 or 6, the process of step S102 may be omitted.

### <Effects of control device>

Effects of the control device 20 according to the embodiment of the invention will be described.

The control device 20 includes the execution section 22 that executes a positional relationship adjustment operation that adjusts a positional relationship between the straddle-type vehicle 1 and an object to a target positional relationship, based on surrounding environment information of the straddle-type vehicle 1. In the positional relationship adjustment operation, the execution section 22 executes a first phase in which the straddle-type vehicle 1 is automatically decelerated and stopped, a second phase in which brake maintenance control that maintains a state where a braking force BF is automatically applied to the stopped straddle-type vehicle 1 is executed, and a third phase in which the straddle-type vehicle 1 is automatically started in response to an acquisition of a start trigger signal, in order. In the second phase, when a release condition is satisfied before the start trigger signal is acquired in a situation where the brake maintenance control is executed, a release operation that automatically releases the braking force BF applied to the straddle-type vehicle 1 is executed. As a result, the operation of an actuator (in the above example, the motor 71), which generates the braking force BF in the straddle-type vehicle 1, by the brake maintenance control can be suppressed. Therefore, a decrease in the life span of the actuator of the straddle-type vehicle 1 can be suppressed. As described above, in the straddle-type vehicle 1, unlike a four-wheeled automobile or the like, since the own weight of the vehicle can also be supported by the legs of a rider, the release operation can be executed before the start trigger signal is acquired.

Preferably, in the control device 20, the release condition is a condition related to time. As a result, the execution of the brake maintenance control for an excessively long time can be suppressed, and suppressing a decrease in the life span of the actuator (in the above example, the motor 71) that generates the braking force BF in the straddle-type vehicle 1 is appropriately achieved.

Preferably, in the control device 20, the release condition is a condition related to operation status information of an actuator (in the above example, the motor 71) that generates a braking force in the straddle-type vehicle 1. As a result, the excessive operation of the brake maintenance control can be suppressed, and suppressing a decrease in the life span of the actuator is appropriately achieved.

Preferably, in the control device 20, in the brake maintenance control, the braking force BF applied to the straddle-type vehicle 1 decreases over time, and the release condition is a condition related to vehicle body behavior information of the straddle-type vehicle 1. As a result, unnecessarily operating the actuator (in the above example, the motor 71), which generates the braking force BF in the straddle-type vehicle 1, again can be suppressed, and suppressing a decrease in the life span of the actuator is appropriately achieved.

Preferably, in the control device 20, the execution section 22 changes the release condition or prohibits the release operation based on gradient information of a road surface. As a result, the release condition can be optimized or the release operation can be prohibited, for example, depending on the influence of the own weight of the straddle-type vehicle 1 on the behavior of the straddle-type vehicle 1.

Preferably, in the control device 20, the execution section 22 changes the release condition or prohibits the release operation based on at least one of passenger information and cargo information of the straddle-type vehicle 1. As a result, the release condition can be optimized or the release operation can be prohibited, for example, depending on how likely the behavior of the straddle-type vehicle 1 is to change due to the weight of a passenger or a cargo.

Preferably, in the control device 20, the execution section 22 changes the release condition or prohibits the release operation based on riding state information of a rider of the straddle-type vehicle 1. As a result, the release condition can be optimized or the release operation can be prohibited, for example, depending on whether the rider is ready for brake operation.

Preferably, in the control device 20, the execution section 22 changes the release condition or prohibits the release operation based on the surrounding environment information of the straddle-type vehicle 1. As a result, the release condition can be optimized or the release operation can be prohibited, for example, depending on the possibility of contact with another vehicle when the release operation is executed.

Preferably, in the control device 20, in the release operation, the execution section 22 controls the braking force BF applied to the straddle-type vehicle 1, based on gradient information of a road surface. As a result, in the release operation, the braking force BF can be appropriately controlled, for example, depending on the influence of the own weight of the straddle-type vehicle 1 on the behavior of the straddle-type vehicle 1.

Preferably, in the control device 20, in the release operation, the execution section 22 controls the braking force BF applied to the straddle-type vehicle 1, based on at least one of passenger information and cargo information of the straddle-type vehicle 1. As a result, in the release operation, the braking force BF can be appropriately controlled, for example, depending on how likely the behavior of the straddle-type vehicle 1 is to change due to the weight of a passenger or a cargo.

Preferably, in the control device 20, in the release operation, the execution section 22 controls the braking force BF applied to the straddle-type vehicle 1, based on riding state information of a rider of the straddle-type vehicle 1. As a result, in the release operation, the braking force BF can be appropriately controlled, for example, depending on whether the rider is ready for brake operation.

Preferably, in the control device 20, in the release operation, the execution section 22 controls the braking force BF applied to the straddle-type vehicle 1, based on the surrounding environment information of the straddle-type vehicle 1. As a result, in the release operation, the braking force BF can be appropriately controlled, for example, depending on the possibility of contact with another vehicle when the release operation is executed.

Preferably, in the control device 20, in the release operation, the execution section 22 controls the braking force BF applied to the straddle-type vehicle 1, based on vehicle body behavior information of the straddle-type vehicle 1. As a result, the braking force BF can be appropriately controlled, for example, depending on how likely the behavior of the straddle-type vehicle 1 is to change along with the release of the braking force BF.

The invention is not limited to the description of the embodiment. Modifications are possible within the scope of the invention, as defined by the appended claims.

### Reference Signs List

- 1:: Straddle-type vehicle
- 2:: Front wheel
- 2a:: Rotor
- 3:: Rear wheel
- 3a:: Rotor
- 10:: Brake system
- 11:: Engine
- 12:: Hydraulic pressure control unit
- 12a:: Substrate
- 13:: Input device
- 14:: Surrounding environment sensor
- 15:: Inertia measurement device
- 16:: Seating sensor
- 17:: Gripping force sensor
- 18:: Front wheel speed sensor
- 19:: Rear wheel speed sensor
- 20:: Control device
- 21:: Acquisition section
- 22:: Execution section
- 31:: Front wheel brake mechanism
- 32:: Rear wheel brake mechanism
- 41:: First brake operating portion
- 42:: Second brake operating portion
- 51:: Master cylinder
- 52:: Reservoir
- 53:: Brake caliper
- 54:: Wheel cylinder
- 55:: Main flow path
- 56:: Auxiliary flow path
- 57:: Supply flow path
- 61:: Inlet valve
- 62:: Outlet valve
- 63:: Accumulator
- 64:: Pump
- 65:: First valve
- 66:: Second valve
- 71:: Motor
- BF:: Braking force
- BF1:: First braking force
- BF2:: Second braking force
- T:: Time axis
- T1:: Time point
- T2:: Time point
- T3:: Time point
- T4:: Time point
- T5:: Time point

## Claims

1. A control device (20) that controls a behavior of a straddle-type vehicle (1), the device comprising:
an execution section (22) that executes a positional relationship adjustment operation that adjusts a positional relationship between the straddle-type vehicle (1) and an object to a target positional relationship, based on surrounding environment information of the straddle-type vehicle (1),
wherein in the positional relationship adjustment operation, the execution section (22) executes a first phase in which the straddle-type vehicle (1) is automatically decelerated and stopped, a second phase in which brake maintenance control that maintains a state where a braking force, BF, is automatically applied to the stopped straddle-type vehicle (1) is executed, and a third phase in which the straddle-type vehicle (1) is automatically started in response to an acquisition of a start trigger signal, in order, and
in the second phase, when a release condition is satisfied before the start trigger signal is acquired in a situation where the brake maintenance control is executed, a release operation that automatically releases the braking force, BF, applied to the straddle-type vehicle (1) is executed.

2. The control device according to claim 1,
wherein the release condition is a condition related to time.

3. The control device according to claim 1,
wherein the release condition is a condition related to operation status information of an actuator (71) that generates a braking force in the straddle-type vehicle (1).

4. The control device according to claim 1,
wherein in the brake maintenance control, the braking force, BF, applied to the straddle-type vehicle (1) decreases over time, and
the release condition is a condition related to vehicle body behavior information of the straddle-type vehicle (1).

5. The control device according to any one of claims 1 to 4,
wherein the execution section (22) changes the release condition or prohibits the release operation based on gradient information of a road surface.

6. The control device according to any one of claims 1 to 4,
wherein the execution section (22) changes the release condition or prohibits the release operation based on at least one of passenger information and cargo information of the straddle-type vehicle (1).

7. The control device according to any one of claims 1 to 4,
wherein the execution section (22) changes the release condition or prohibits the release operation based on riding state information of a rider of the straddle-type vehicle (1).

8. The control device according to any one of claims 1 to 4,
wherein the execution section (22) changes the release condition or prohibits the release operation based on the surrounding environment information.

9. The control device according to any one of claims 1 to 4,
wherein in the release operation, the execution section (22) controls the braking force, BF, applied to the straddle-type vehicle (1), based on gradient information of a road surface.

10. The control device according to any one of claims 1 to 4,
wherein in the release operation, the execution section (22) controls the braking force, BF, applied to the straddle-type vehicle (1), based on at least one of passenger information and cargo information of the straddle-type vehicle (1).

11. The control device according to any one of claims 1 to 4,
wherein in the release operation, the execution section (22) controls the braking force, BF, applied to the straddle-type vehicle (1), based on riding state information of a rider of the straddle-type vehicle (1).

12. The control device according to any one of claims 1 to 4,
wherein in the release operation, the execution section (22) controls the braking force, BF, applied to the straddle-type vehicle (1), based on the surrounding environment information.

13. The control device according to any one of claims 1 to 4,
wherein in the release operation, the execution section (22) controls the braking force, BF, applied to the straddle-type vehicle (1), based on vehicle body behavior information of the straddle-type vehicle (1).

14. A control method for controlling a behavior of a straddle-type vehicle (1), the method comprising:
causing an execution section (22) of a control device (20) to execute a positional relationship adjustment operation that adjusts a positional relationship between the straddle-type vehicle (1) and an object to a target positional relationship, based on surrounding environment information of the straddle-type vehicle (1),
wherein in the positional relationship adjustment operation, the execution section (22) executes a first phase in which the straddle-type vehicle (1) is automatically decelerated and stopped, a second phase in which brake maintenance control that maintains a state where a braking force, BF, is automatically applied to the stopped straddle-type vehicle (1) is executed, and a third phase in which the straddle-type vehicle (1) is automatically started in response to an acquisition of a start trigger signal, in order, and
in the second phase, when a release condition is satisfied before the start trigger signal is acquired in a situation where the brake maintenance control is executed, a release operation that automatically releases the braking force, BF, applied to the straddle-type vehicle (1) is executed.

## Patentansprüche

1. Steuerungsvorrichtung (20), die das Verhalten eines Spreizsitzfahrzeugs (1) steuert, die Vorrichtung umfassend:
einen Ausführungsabschnitt (22), der eine Operation der Positionsverhältnisjustierung ausführt, die basierend auf Informationen zum umgebenden Umfeld des Spreizsitzfahrzeugs (1) ein Positionsverhältnis zwischen dem Spreizsitzfahrzeug (1) und einem Objekt zu einem Sollpositionsverhältnis justiert,
wobei der Ausführungsabschnitt (22) in der Operation der Positionsverhältnisjustierung in Reihenfolge eine erste Phase ausführt, in der das Spreizsitzfahrzeug (1) automatisch verlangsamt und angehalten wird, eine zweite Phase, in der eine
Bremsungsaufrechterhaltungssteuerung ausgeführt wird, die einen Zustand aufrechterhält, in dem eine Bremskraft, BF, automatisch auf das angehaltene Spreizsitzfahrzeug (1) ausgeübt wird, und eine dritte Phase, in der das Spreizsitzfahrzeug (1) in Reaktion auf eine Erfassung eines Startauslösesignals automatisch gestartet wird, und
in der zweiten Phase, wenn eine Freigabebedingung erfüllt ist, bevor das Startauslösesignal erfasst wird, in einer Situation, in der die Bremsungsaufrechterhaltungssteuerung ausgeführt wird, eine Freigabeoperation ausgeführt wird, welche die Bremskraft, BF, automatisch freigibt, die auf das Spreizsitzfahrzeug (1) ausgeübt wird.

2. Steuerungsvorrichtung nach Anspruch 1,
wobei die Freigabebedingung eine zeitbezogene Bedingung ist.

3. Steuerungsvorrichtung nach Anspruch 1,
wobei die Freigabebedingung eine Bedingung ist, die sich auf Informationen zum Betriebsstatus eines Aktors (71) bezieht, der eine Bremskraft in dem Spreizsitzfahrzeug (1) erzeugt.

4. Steuerungsvorrichtung nach Anspruch 1,
wobei in der Bremsungsaufrechterhaltungssteuerung die Bremskraft, BF, die auf das Spreizsitzfahrzeug (1) ausgeübt wird, im Zeitverlauf abnimmt, und
die Freigabebedingung eine Bedingung ist, die sich auf Informationen zum Verhalten des Fahrzeugaufbaus des Spreizsitzfahrzeugs(1) bezieht.

5. Steuerungsvorrichtung nach einem der Ansprüche 1 bis 4,
wobei der Ausführungsabschnitt (22) basierend auf Informationen zur Neigung einer Straßenoberfläche die Freigabebedingung verändert oder die Freigabeoperation unterbindet.

6. Steuerungsvorrichtung nach einem der Ansprüche 1 bis 4,
wobei der Ausführungsabschnitt (22) basierend auf mindestens einem von Fahrgastinformationen oder Frachtinformationen des Spreizsitzfahrzeugs (1) die Freigabebedingung verändert oder die Freigabeoperation unterbindet.

7. Steuerungsvorrichtung nach einem der Ansprüche 1 bis 4,
wobei der Ausführungsabschnitt (22) basierend auf Fahrzustandsinformationen eines Fahrers des Spreizsitzfahrzeugs (1) die Freigabebedingung verändert oder die Freigabeoperation unterbindet.

8. Steuerungsvorrichtung nach einem der Ansprüche 1 bis 4,
wobei der Ausführungsabschnitt (22) basierend auf den Informationen zum umgebenden Umfeld die Freigabebedingung verändert oder die Freigabeoperation unterbindet.

9. Steuerungsvorrichtung nach einem der Ansprüche 1 bis 4,
wobei der Ausführungsabschnitt (22) in der Freigabeoperation die Bremskraft, BF, die auf das Spreizsitzfahrzeug (1) ausgeübt wird, basierend auf Informationen zur Neigung der Straßenoberfläche steuert.

10. Steuerungsvorrichtung nach einem der Ansprüche 1 bis 4,
wobei der Ausführungsabschnitt (22) in der Freigabeoperation die Bremskraft, BF, die auf das Spreizsitzfahrzeug (1) ausgeübt wird, basierend auf mindestens einem von Fahrgastinformationen und Frachtinformationen des Spreizsitzfahrzeugs (1) steuert.

11. Steuerungsvorrichtung nach einem der Ansprüche 1 bis 4,
wobei der Ausführungsabschnitt (22) in der Freigabeoperation die Bremskraft, BF, die auf das Spreizsitzfahrzeug (1) ausgeübt wird, basierend auf Fahrzustandsinformationen eines Fahrers des Spreizsitzfahrzeugs (1) steuert.

12. Steuerungsvorrichtung nach einem der Ansprüche 1 bis 4,
wobei der Ausführungsabschnitt (22) in der Freigabeoperation die Bremskraft, BF, die auf das Spreizsitzfahrzeug (1) ausgeübt wird, basierend auf den Informationen zum umgebenden Umfeld steuert.

13. Steuerungsvorrichtung nach einem der Ansprüche 1 bis 4,
wobei der Ausführungsabschnitt (22) in der Freigabeoperation die Bremskraft, BF, die auf das Spreizsitzfahrzeug (1) ausgeübt wird, basierend auf Informationen zum Verhalten des Fahrzeugaufbaus des Spreizsitzfahrzeugs (1) steuert.

14. Steuerverfahren für das Verhalten eines Spreizsitzfahrzeugs (1), das Verfahren Folgendes umfassend:
Veranlassen, dass ein Ausführungsabschnitt (22) einer Steuervorrichtung (20) eine Operation der Positionsverhältnisjustierung ausführt, die basierend auf Informationen zum umgebenden Umfeld des Spreizsitzfahrzeugs (1) ein Positionsverhältnis zwischen dem Spreizsitzfahrzeug (1) und einem Objekt zu einem Sollpositionsverhältnis justiert,
wobei der Ausführungsabschnitt (22) in der Operation der Positionsverhältnisjustierung in Reihenfolge eine erste Phase ausführt, in der das Spreizsitzfahrzeug (1) automatisch verlangsamt und angehalten wird, eine zweite Phase, in der eine
Bremsungsaufrechterhaltungssteuerung ausgeführt wird, die einen Zustand aufrechterhält, in dem eine Bremskraft, BF, automatisch auf das angehaltene Spreizsitzfahrzeug (1) ausgeübt wird, und eine dritte Phase, in der das Spreizsitzfahrzeug (1) in Reaktion auf eine Erfassung eines Startauslösesignals automatisch gestartet wird, und
in der zweiten Phase, wenn eine Freigabebedingung erfüllt ist, bevor das Startauslösesignal erfasst wird, in einer Situation, in der die Bremsungsaufrechterhaltungssteuerung ausgeführt wird, eine Freigabeoperation ausgeführt wird, welche die Bremskraft, BF, automatisch freigibt, die auf das Spreizsitzfahrzeug (1) ausgeübt wird.

## Revendications

1. Dispositif de commande (20) qui commande un comportement d'un véhicule à selle (1), le dispositif comprenant :
une section d'exécution (22) qui exécute une opération d'ajustement de relation positionnelle qui ajuste une relation positionnelle, entre le véhicule à selle (1) et un objet, à une relation positionnelle cible, sur la base d'informations d'environnement ambiant du véhicule à selle (1),
dans lequel, dans l'opération d'ajustement de relation positionnelle, la section d'exécution (22) exécute une première phase, dans laquelle le véhicule à selle (1) est automatiquement ralenti et arrêté, une deuxième phase, dans laquelle une commande de maintien de frein qui maintient un état où une force de freinage, BF, est automatiquement appliquée sur le véhicule à selle arrêté (1) est exécutée, et une troisième phase, dans laquelle le véhicule à selle (1) est automatiquement démarré en réponse à une acquisition d'un signal de déclenchement de démarrage, dans l'ordre, et
dans la deuxième phase, lorsqu'une condition de relâchement est respectée avant que le signal de déclenchement de démarrage ne soit acquis dans une situation où la commande de maintien de frein est exécutée, une condition de relâchement qui relâche automatiquement la force de freinage, BF, appliquée sur le véhicule à selle (1) est exécutée.

2. Dispositif de commande selon la revendication 1, dans lequel la condition de relâchement est une condition connexe au temps.

3. Dispositif de commande selon la revendication 1, dans lequel la condition de relâchement est une condition connexe à des informations de statut d'opération d'un actionneur (71) qui génère une force de freinage dans le véhicule à selle (1).

4. Dispositif de commande selon la revendication 1, dans lequel, dans la commande de maintien de frein, la force de freinage, BF, appliquée sur le véhicule à selle (1) diminue au fil du temps, et
la condition de relâchement est une condition connexe à des informations de comportement de carrosserie de véhicule du véhicule à selle (1).

5. Dispositif de commande selon l'une quelconque des revendications 1 à 4,
dans lequel la section d'exécution (22) change la condition de relâchement ou empêche la condition de relâchement sur la base d'informations de gradient d'une surface de route.

6. Dispositif de commande selon l'une quelconque des revendications 1 à 4,
dans lequel la section d'exécution (22) change la condition de relâchement ou empêche la condition de relâchement sur la base d'au moins un type d'informations parmi des informations de passager et des informations de bagages du véhicule à selle (1).

7. Dispositif de commande selon l'une quelconque des revendications 1 à 4,
dans lequel la section d'exécution (22) change la condition de relâchement ou empêche la condition de relâchement sur la base d'informations d'état de conduite par motocycliste d'un motocycliste du véhicule à selle (1).

8. Dispositif de commande selon l'une quelconque des revendications 1 à 4,
dans lequel la section d'exécution (22) change la condition de relâchement ou empêche la condition de relâchement sur la base des informations d'environnement ambiant.

9. Dispositif de commande selon l'une quelconque des revendications 1 à 4,
dans lequel, dans la condition de relâchement, la section d'exécution (22) commande la force de freinage, BF, appliquée sur le véhicule à selle (1), sur la base d'informations de gradient d'une surface de route.

10. Dispositif de commande selon l'une quelconque des revendications 1 à 4,
dans lequel, dans la condition de relâchement, la section d'exécution (22) commande la force de freinage, BF, appliquée sur le véhicule à selle (1), sur la base d'au moins un type d'informations parmi des informations de passager et des informations de bagages du véhicule à selle (1).

11. Dispositif de commande selon l'une quelconque des revendications 1 à 4,
dans lequel, dans la condition de relâchement, la section d'exécution (22) commande la force de freinage, BF, appliquée sur le véhicule à selle (1), sur la base d'informations d'état de conduite par motocycliste d'un motocycliste du véhicule à selle (1).

12. Dispositif de commande selon l'une quelconque des revendications 1 à 4,
dans lequel, dans la condition de relâchement, la section d'exécution (22) commande la force de freinage, BF, appliquée sur le véhicule à selle (1), sur la base des informations d'environnement ambiant.

13. Dispositif de commande selon l'une quelconque des revendications 1 à 4,
dans lequel, dans la condition de relâchement, la section d'exécution (22) commande la force de freinage, BF, appliquée sur le véhicule à selle (1), sur la base d'informations de comportement de carrosserie de véhicule du véhicule à selle (1).

14. Procédé de commande pour commander un comportement d'un véhicule à selle (1), le procédé comprenant :
le fait d'amener une section d'exécution (22) d'un dispositif de commande (20) à exécuter une opération d'ajustement de relation positionnelle qui ajuste une relation positionnelle entre le véhicule à selle (1) et un objet à une relation positionnelle cible, sur la base d'informations d'environnement ambiant du véhicule à selle (1),
dans lequel, dans l'opération d'ajustement de relation positionnelle, la section d'exécution (22) exécute une première phase, dans laquelle le véhicule à selle (1) est automatiquement ralenti et arrêté, une deuxième phase, dans laquelle une commande de maintien de frein qui maintient un état où une force de freinage, BF, est automatiquement appliquée sur le véhicule à selle arrêté (1) est exécutée, et une troisième phase, dans laquelle le véhicule à selle (1) est automatiquement démarré en réponse à une acquisition d'un signal de déclenchement de démarrage, dans l'ordre, et
dans la deuxième phase, lorsqu'une condition de relâchement est respectée avant que le signal de déclenchement de démarrage ne soit acquis dans une situation où la commande de maintien de frein est exécutée, une condition de relâchement qui relâche automatiquement la force de freinage, BF, appliquée sur le véhicule à selle (1) est exécutée.
